(19) Europäisches Patentamt
European Patent Office
Office européen des brevets

(11) **EP 1 626 317 B1**

(12) **EUROPÄISCHE PATENTSCHRIFT**

(45) Veröffentlichungstag und Bekanntmachung des Hinweises auf die Patenterteilung:
**24.06.2009   Patentblatt 2009/26**

(51) Int Cl.:
*G05B 17/02* $^{(2006.01)}$   *G05B 13/02* $^{(2006.01)}$

(21) Anmeldenummer: **05450114.3**

(22) Anmeldetag: **28.06.2005**

(54) **Verfahren zur Erstellung eines nichtlinearen, stationären oder dynamischen Modells einer Steuergrösse einer Arbeitsmaschine**

Method for developing a nonlinear, stationary or dynamical model of a control variable of a construction machine

Procédé de mise au point d'un modèle non-lineaire ,stationaire ou dynamique de variable de commande pour engin de construction

(84) Benannte Vertragsstaaten:
**AT DE FR GB**

(30) Priorität: **30.06.2004   AT 45904 U**

(43) Veröffentlichungstag der Anmeldung:
**15.02.2006   Patentblatt 2006/07**

(73) Patentinhaber: **AVL List GmbH**
**8020 Graz (AT)**

(72) Erfinder:
  • **Jakubek, Stefan**
    **1140 Wien (AT)**
  • **Pflügl, Horst**
    **8502 Lannach (AT)**
  • **Gschweitl, Kurt**
    **8063 Eggersdorf (AT)**

(74) Vertreter: **Laminger, Norbert et al**
**Pinter, Laminger & Weiss OG**
**Patentanwälte**
**Prinz-Eugen-Strasse 70**
**1040 Wien (AT)**

(56) Entgegenhaltungen:
  • **ISERMANN R ET AL: "Design of computer controlled combustion engines" MECHATRONICS, PERGAMON PRESS, OXFORD, GB, Bd. 13, Nr. 10, Dezember 2003 (2003-12), Seiten 1067-1089, XP004448736 ISSN: 0957-4158**
  • **NELLES O ET AL: "Local Basis Function Networks For Identification Of A Turbocharger" CONTROL '96, UKACC INTERNATIONAL CONFERENCE ON (CONF. PUBL. NO. 427), ,IEE, Bd. 1, 1996, Seiten 7-12, XP006505703 ISBN: 0-85296-668-7**
  • **NELLES O: "LOLIMOT - LOKALE, LINEARE MODELLE ZUR IDENTIFIKATION NICHTLINEARER,DYNAMISCHER SYSTEME" AUTOMATISIERUNGSTECHNIK - AT, OLDENBOURG WISSENSCHAFTSVERLAG, MUNCHEN, DE, Bd. 45, Nr. 4, April 1997 (1997-04), Seiten 163-174, XP000689392 ISSN: 0178-2312**

## EP 1 626 317 B1

## Beschreibung

Die Erfindung betrifft ein Verfahren zur Erstellung eines nichtlinearen stationären oder dynamischen Modells einer Arbeitsmaschine, insbesonders eines Verbrennungsmotors oder eines Teilsystems davon, im gesamten Raum aller Betriebspunkte der Arbeitsmaschine, vorzugsweise unter Verwendung von neuronalen Netzen, mit einer von einem Satz von Eingangsgrößen, beispielsweise Systemparametern, nach der Zeit differenzierten Systemparametern, zeitverzögert rückgekoppelten Ausgangsgrößen und/oder Vorgabewerten am jeweiligen Betriebspunkt abhängigen Steuergröße, die für eine Gruppe von Betriebspunkten aus dem gesamten Raum von Betriebspunkten der Arbeitsmaschine messtechnisch ermittelt wird, wobei an diesen Betriebspunkten unter Verwendung einer vereinfachten Teil-Modellfunktion eine Ausgangsgröße pro Modellfunktion bestimmt wird, und wobei an jedem beliebigen Betriebspunkt die Ausgangsgrößen jeder Teil-Modellfunktion mit einer zugehörigen Gewichtungsfunktion gewichtet zu einer Gesamt-Ausgangsgröße für den jeweiligen Betriebspunkt zusammengezählt werden, wobei für alle Betriebspunkte mit messtechnisch ermittelter Steuergröße jeweils die Differenz zwischen der Gesamt-Ausgangsgröße und dem messtechnisch ermittelten Wert der Steuergröße bestimmt wird und in Bereichen von Betriebspunkten mit einem Absolutbetrag dieser Differenz oberhalb eines vorgegebenen Wertes eine weitere Modellfunktion mit einer weiteren zugehörigen Gewichtungsfunktion verwendet wird, bei welcher der Absolutbetrag der Differenz unterhalb des vorgegebenen Wertes bleibt.

Modelle von realen Vorgängen sind von grundlegender Bedeutung in nahezu allen Bereichen der Forschung. Modelle von Systemen oder Prozessen werden für eine Vielzahl von Anwendungen benötigt, etwa für die Vorhersage oder Simulation eines Systemverhaltens, um ein besseres Verständnis des Systems zu erhalten, die Verbesserung oder Optimierung eines bestehenden Prozesses oder Entwurf eines neuen Systems oder auch die Erstellung von Reglern, Fehlerdiagnose und Steuerungssystemen für reale Systeme, basierend auf Prozessmodellen.

Die Modellierung und Identifikation von nichtlinearen Systemen ist sehr anspruchsvoll, da nichtlineare Systeme die Eigenschaft einer unendlichen strukturellen Vielfalt im Vergleich zu linearen Systemen besitzen können. Eine Hauptanforderung an einen Algorithmus zur Identifikation von nichtlinearen Systemen ist deshalb, dass eine Vielzahl von strukturell verschiedenen Systemen beschrieben werden kann. Im Gegensatz zu sehr speziellen Lösungsansätzen, wo die Struktur der Nichtlinearität mehr oder weniger fix vorgegeben ist, sind Local Model Trees fähig, eine große Anzahl von nichtlinearen Systemen zu behandeln und können deshalb auch für Anwendungen eingesetzt werden, wo ein hoher Grad an Flexibilität gefordert wird.

Das grundlegende Prinzip der Neuro-Fuzzy Modelle wurde mehr oder weniger unabhängig voneinander in mehreren Bereichen wie Neuronale Netze, Fuzzy Logik, Statistik und künstliche Intelligenz unter den verschiedensten Namen wie Lokale-Modelle-Netz, Takagi-Sugeno Fuzzy Modelle oder lokale Modelle entwickelt. Die Modellarchitektur der linearen Neuro-Fuzzy Teilmodelle stellen einen ausgezeichneten Ansatz dar, mehrere Wissensquellen zu integrieren, da sie eine gute Interpretierbarkeit besitzen. Das Neuro Fuzzy Modell interpoliert lokale Modelle, die jeweils in verschiedenen Betriebsbereichen gültig sind.

Eine neue Entwicklung ist der "Local Linear Model Tree, LOLIMOT". Er basiert auf der Idee der Näherung einer Nichtlinearität durch stückweise lineare Teilmodelle. Dieser Algorithmus besitzt eine äußere Schleife, welche die Gültigkeitsbereiche der Teilmodelle festlegt, und eine innere Schleife, welche die Parameter dieser Teilmodelle bestimmt. Die Bereiche, in denen die linearen Modelle gültig sind, sind nicht scharf getrennt, sondern verschwommen, d.h. die linearen Teilmodelle werden durch passende Gewichtsfunktionen, sogenannte Gültigkeitsfunktionen, zusammengeführt. Normalerweise werden für diesen Zweck Gauss'sche Verteilungsfunktionen verwendet. Die Parameter der linearen Teilmodelle werden mit der Methode der kleinsten Fehlerquadrate bestimmt, die klare Vorteile gegenüber einer globalen Parameterschätzung besitzt. Die nichtlinearen Modellparameter, d.h. die Anzahl und die Parameter der Gewichtungsfunktionen, werden durch einen iterativen Konstruktions-Algorithmus bestimmt, um die Anwendung von nichtlinearen Optimierungstechniken zu vermeiden.

Eine der Hauptstärken von Local Model Trees ist, dass die Prämisse (d.h. Gewichtungsfunktion) und die Auswirkung (d.h. lineares Teilmodell) nicht von identischen Variablen abhängig sein müssen. Dadurch kann der "Fluch der Dimensionalität" durch Einbindung von Vorwissen über den Prozess vermieden werden. Ein weiterer Vorteil von Local Model Trees liegt darin, dass sie entworfen wurden um sich automatisch auf hoch effiziente Weise an die Komplexität des Problems anzupassen. Jene Bereiche des Eingangsraumes, wo die Struktur der Nichtlinearität komplex ist, werden in viele Teilbereiche unterteilt, sodass sie ausreichend durch Teilmodelle dargestellt werden können.

Der LOLIMOT Algorithmus wurde so entworfen, dass er systematisch Bereiche des Eingangsraumes halbiert. Teilmodelle, die nicht ausreichend gut passen, werden deshalb durch zwei oder mehrere kleinere Modelle ersetzt, in der Erwartung, dass diese in ihrem Gültigkeitsbereich die nichtlineare Zielfunktion besser abbilden. Der Hauptnachteil dieser Vorgehensweise liegt daran, dass diese Strategie mehr oder weniger auf "trial and error" basiert und deshalb viel unnötige Rechenleistung nach sich zieht. Außerdem sind die Bereichsunterteilungen Achsen-orthogonal, weshalb die Anforderungen durch die Struktur der Nichtlinearität oft nicht erfüllt werden. In den meisten praktischen Anwendungen ist die Anzahl der Daten für die Modellbildung limitiert und die Verteilung im Eingangsbereich gering. Dies verursacht eine Limitierung des Baum-Konstruktions-Algorithmus und führt dazu, dass viele Teilmodelle gebildet werden, wo viel weniger ausreichend wären. Dieses Problem wurde kürzlich mittels Fuzzy Clustering behandelt, trotzdem ist der Algorithmus weiterhin auf orthogonale Unterteilung beschränkt.

Ein Verfahren wie eingangs angegeben, wird in "Design of computer controlled combustion engines" (R. Isermann et al., Mechatronics, Pergamon Press, Oxford, GB, Bd. 13, Nr. 10, Dezember 2003, Seiten 1067 bis 1089) beschrieben. Darin werden "rapid control prototyping" Anwendungen erläutert, ohne jedoch auf Verringerung des Zeitaufwandes, Verringerung der Anzahl der benötigten Modelle und deren Wechselwirkung mit der Vorhersagequalität zu zielen.

Die Aufgabe der vorliegenden Erfindung war daher ein Verfahren der eingangs angegebenen Art, welches rascher, d.h. mit weniger Iterationen, zu einem optimalen Gesamt-Modell für die Steuergröße einer Arbeitsmaschine, insbesonders eines Verbrennungsmotors oder eines Teilsystems davon, kommt und dabei einer statistisch begründeten hohen Vorhersagequalität genügt, sodass letztlich ein Gesamtmodell vorliegt, welches bei möglichst wenig Teilmodellen eine sehr gute statistische Vorhersagequalität aufweist. Damit soll die optimale Bestimmung der Steuergröße der Arbeitsmaschine auch in den nicht vermessenen Betriebspunkten möglich sein.

Zur Lösung dieser Aufgabe ist erfindungsgemäß vorgesehen, daß die Schritte der Ermittlung der Differenz zwischen der Gesamt-Ausgangsgröße der zugehörigen Teil-Modellfunktionen und einem realen Wert der Steuergröße an diesem realen Betriebspunkt sowie der Anwendung einer weiteren Modellfunktion und weiteren Gewichtungsfunktion so oft durchlaufen werden, bis die statistisch bewertete Vorhersagequalität des Gesamt-Modells einen gewünschten Wert erreicht hat.

Vorzugsweise wird dabei die optimale Erstellung eines Gesamt-Modells gefördert, wenn der jeweils letzte Schritt rückgängig gemacht und der Durchlauf beendet wird, wenn sich die statistisch bewertete Vorhersagequalität wieder verschlechtert.

Gemäß einer weiteren Ausgestaltung des erfindungsgemäßen Verfahrens ist vorgesehen, dass jede Gewichtungsfunktion eine radial symmetrische Funktion (Hyper-Ellipsoid) im n-dimensionalen Raum der Betriebspunkte ist, wobei die Isokurven der Gewichtungsfunktion im Raum der Betriebspunkte ein geschlossenes geometrisches Gebilde darstellen, und jede Isokurve mit Gewichtungswerten einer definierten Grenze, vorzugsweise von 90% des maximalen Wertes der Gewichtungsfunktion, eine Gruppe von realen Betriebspunkten geometrisch umschließt. Damit wird die Modellbildung gegenüber achsenorthogonal unterteilenden Verfahren verbessert, indem durch Erlauben einer beliebigen Orientierung und Ausdehnung der Modellfunktionen ein besserer Angleich an die Betriebspunkte ermöglicht wird.

Vorzugsweise ist dabei die Isokurve der Gewichtungsfunktion im n-dimensionalen Raum ein Hyper-Ellipsoid, dessen Hauptachsen im Raum der Betriebspunkte eine gegenüber dem Koordinatensystem prinzipiell beliebige Orientiertung aufweisen.

Der beste Übergang zwischen den lokalen Teilmodellen lässt sich dadurch erzielen, daß die Gewichtungsfunktion eine Exponentialfunktion zumindest einer Eingangsgröße am jeweiligen Betriebspunkt ist.

Gemäß einer bevorzugten Variante des Verfahrens ist vorgesehen, daß eine erste Gewichtungsfunktion vorgesehen ist, dessen Isokurve eines definierten Gewichtungswertes alle realen Betriebspunkte geometrisch einschließt.

Vorteilhafterweise werden dabei vom Betriebspunkt mit dem größten Absolutbetrag der Differenz zwischen Gesamt Ausgangsgröße des Modells und tatsächlichem Wert der Steuergröße aus, weitere Punkte für das nächste Teilmodell bestimmt und an dessen Zentrum die weitere Gewichtungsfunktion platziert. Die Teilmodelle werden somit nacheinander in jenen Regionen des Eingangsraumes plaziert, wo der Modellfehler groß ist, um eine maximale Verbesserung durch jedes einzelne weitere Teilmodell zu gewährleisten.

Gemäß einer bevorzugten Variante des beschriebenen Verfahrens ist vorgesehen, daß die Anzahl der realen Betriebspunkte innerhalb der Isokurve eines definierten Gewichtungswertes der Gewichtungsfunktion größer ist als die Anzahl der Regressoren, vorzugsweise um zumindest einen Faktor 1,05. Die Ausrichtung und Ausdehnung eines jeden Teilmodells ist durch diese Maßnahmen optimal an die vorhandenen Trainingsdaten, mit maximaler statistischer Übereinstimmung an die Messdaten sowie an das Signal/Rausch - Verhältnis angepasst, wodurch die Bestimmung der lokalen Regressionsparameter ein gut konditioniertes Problem darstellt.

Dabei wird vorzugsweise bei Absinken der Anzahl der Regressoren innerhalb der geschlossenen Isokurve eines definierten Gewichtungswertes der Gewichtungsfunktion unter die mit einem Faktor multiplizierte Anzahl der Eingangsgrößen, vorzugsweise unterhalb die mit einem Faktor 1,05 multiplizierte Anzahl, dieses Teil-Modell und zugehörige Gewichtungsfunktion vom Gesamtmodell entfernt.

Vorteilhafterweise wird beim erfindungsgemäßen Verfahren der Fehler der Modellfunktion innerhalb der definierten Isokurven jeder Gewichtungsfunktion kleiner als 10% gehalten.

Die hohe Effizienz des erfindungsgemäßen Verfahrens führt zu einem deutlich besseren Ergebnis bei gleichzeitig geringerem rechnerischem Aufwand, weniger Teilmodellen und generell besserem Vertrauensbereich. Neben der Erstellung eines Modells eines nichtlinearen Prozesses, ist das hier vorgestellte neuronale Netz fähig, Informationen über seine Genauigkeit in Form von Vertrauensintervallen zu liefern.

In der nachfolgenden Beschreibung soll die Erfindung anhand von Beispielen und den beigefügten Zeichnungsfiguren näher erläutert werden.

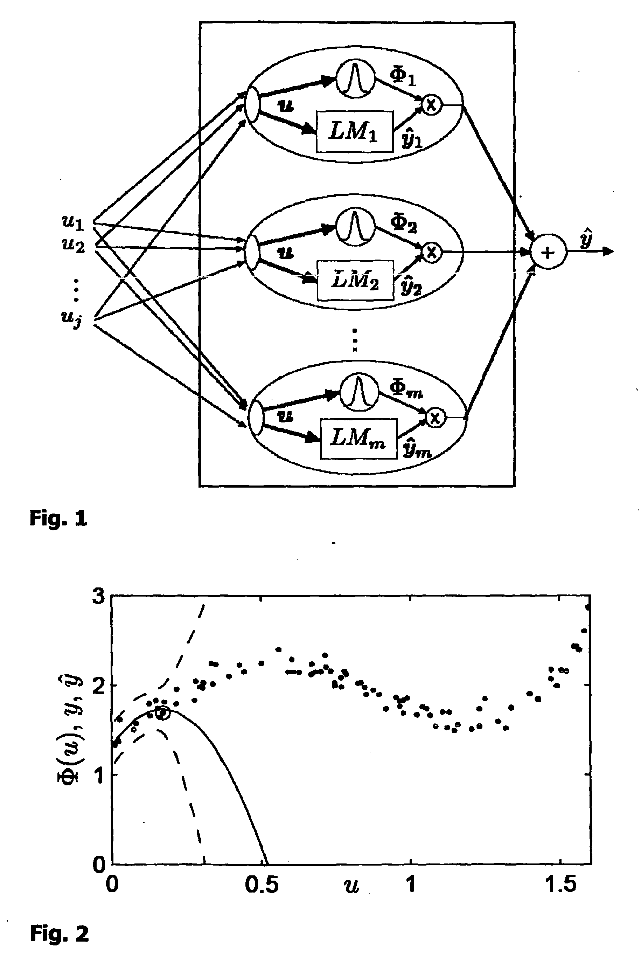

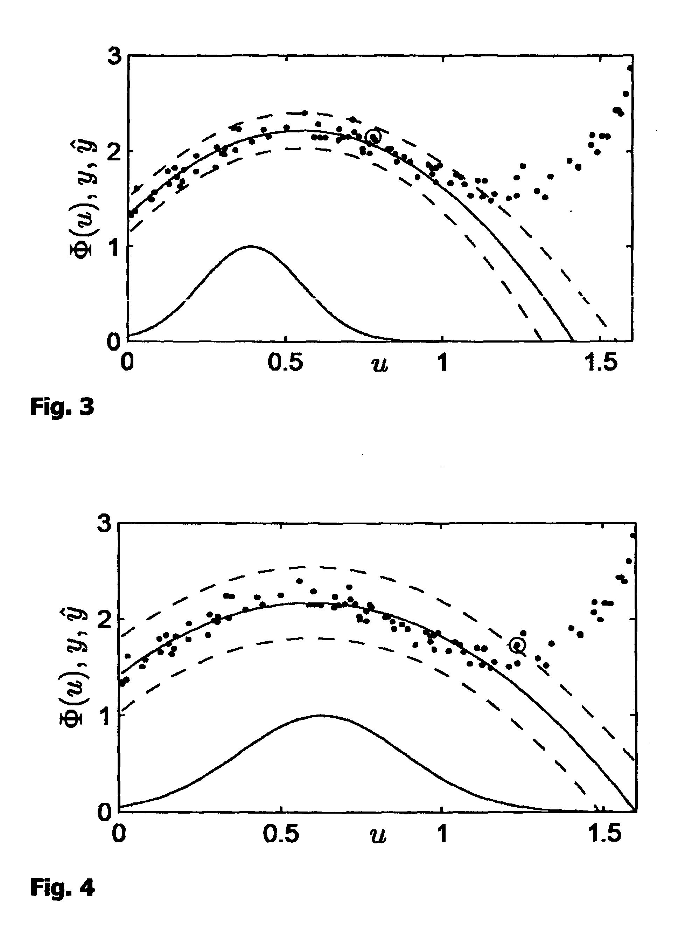

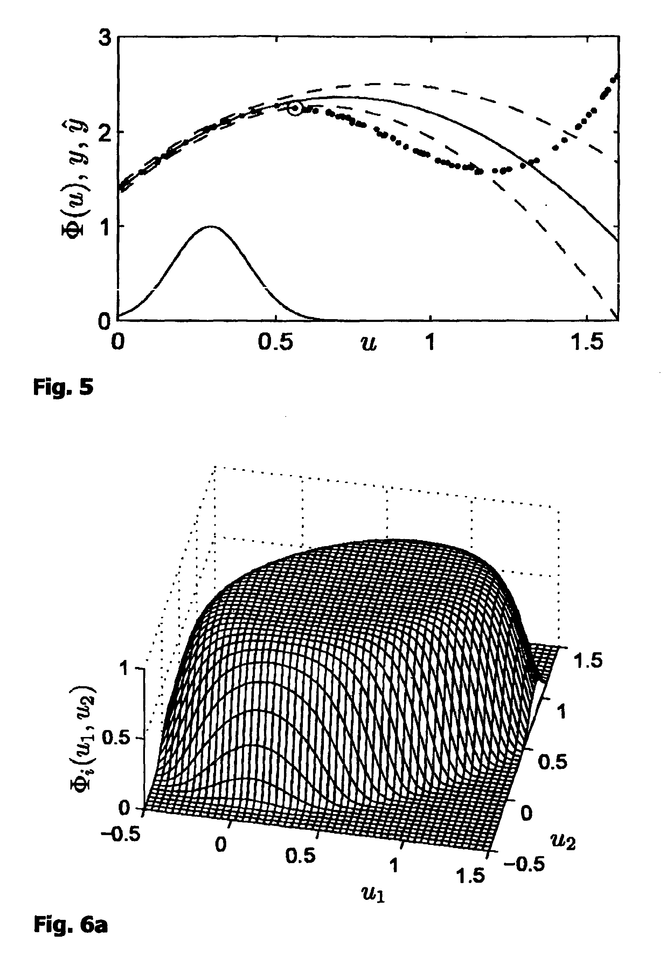

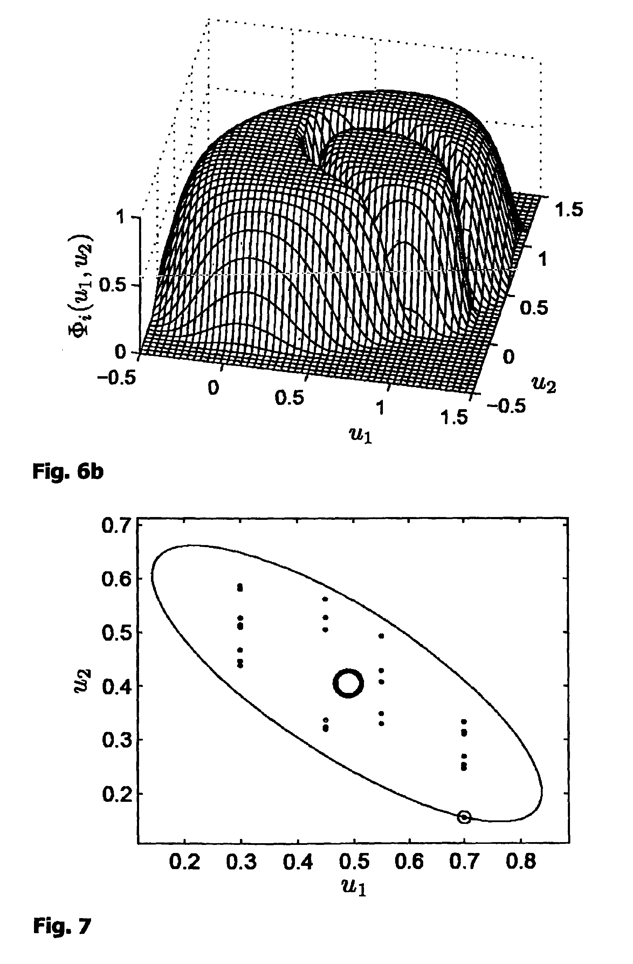

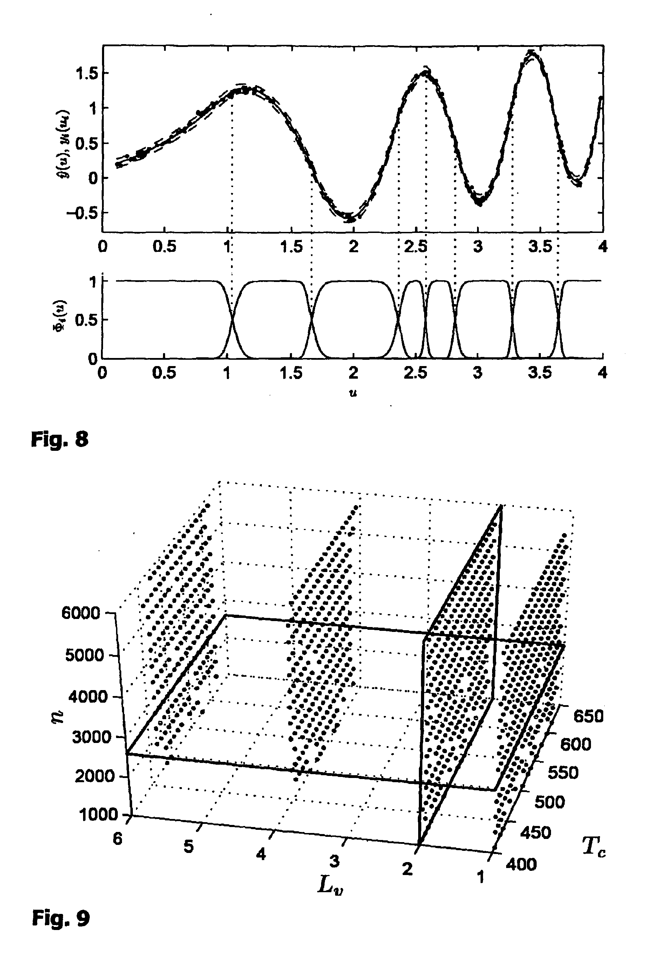

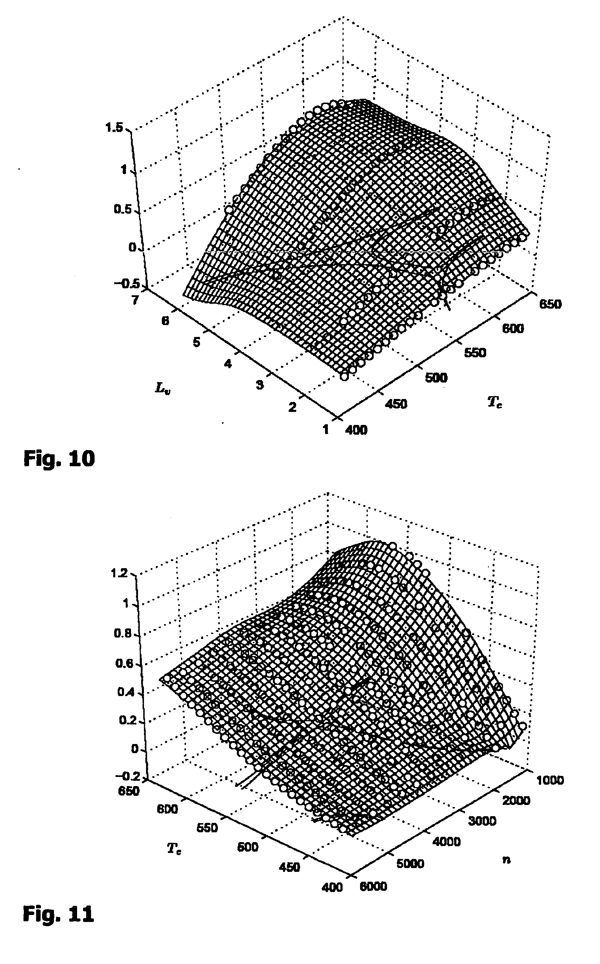

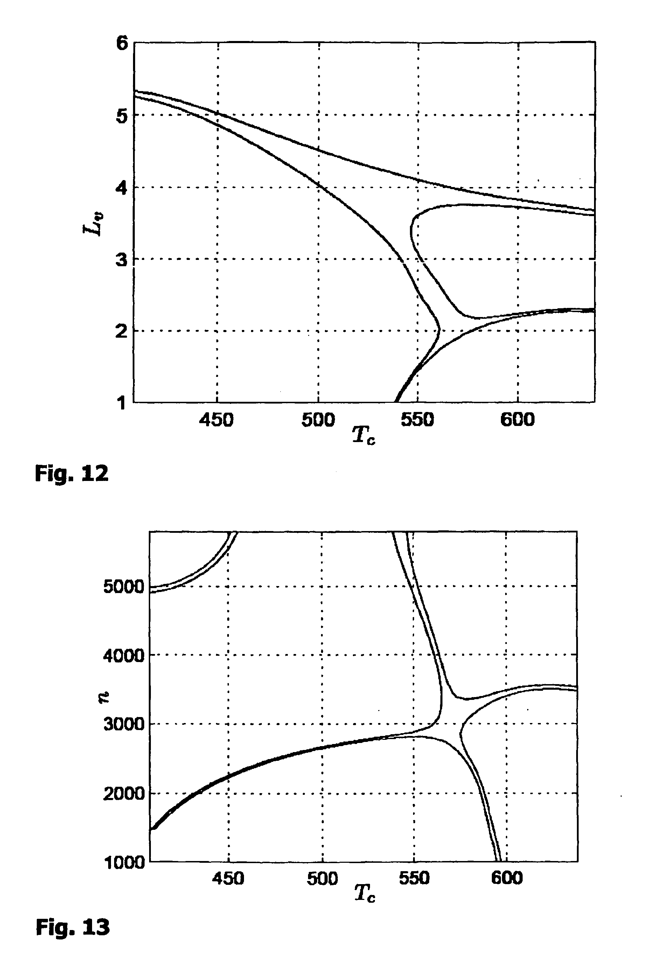

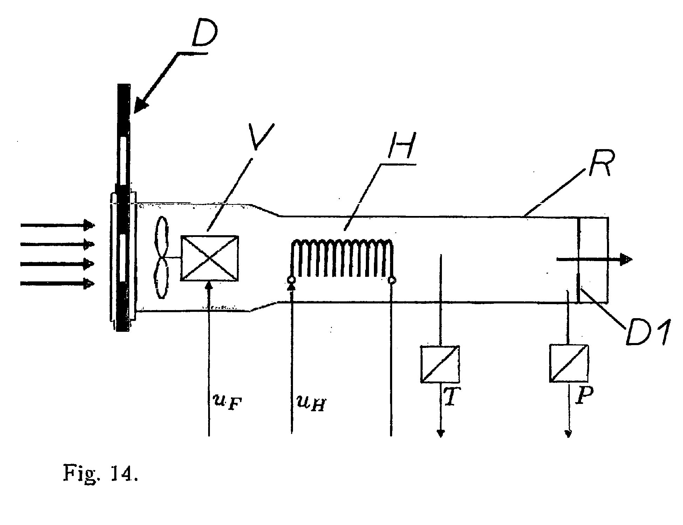

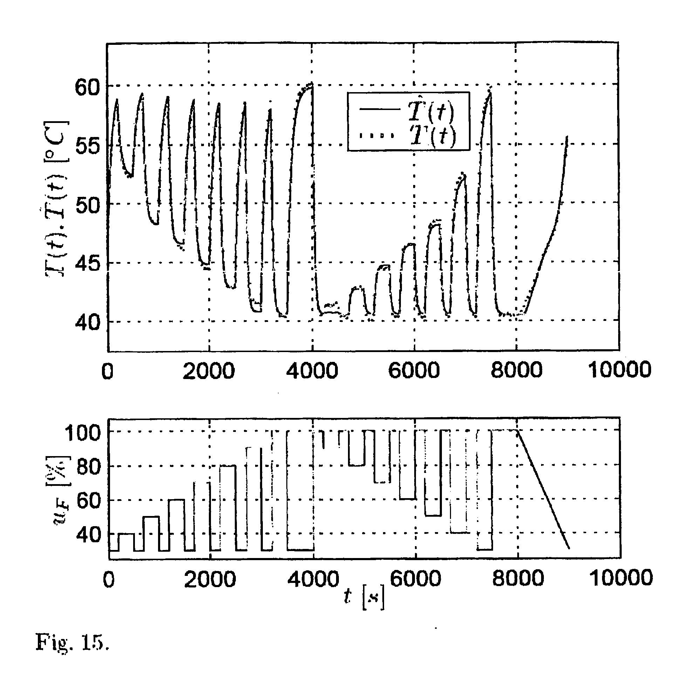

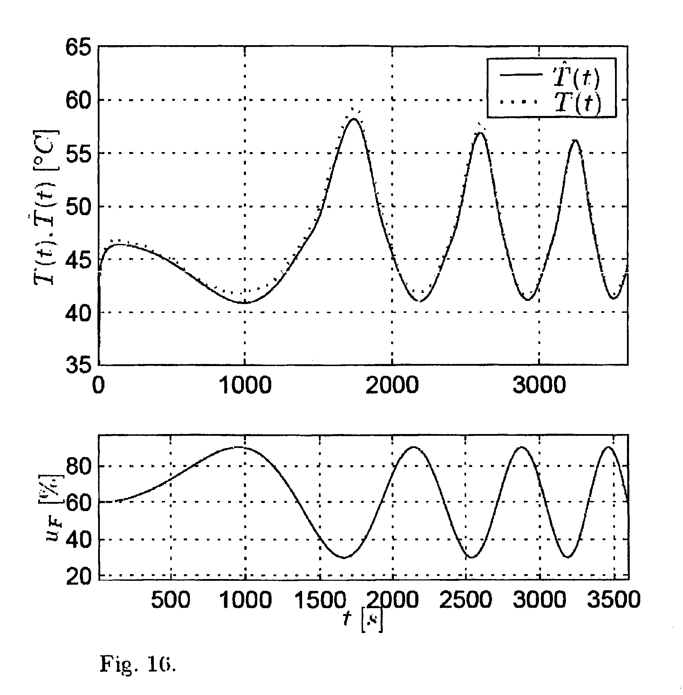

Dabei zeigt die Fig. 1 schematisch den Aufbau eines Local Model Trees, Fig. 2 zeigt am Beispiel einer nichtlinearen Eingangsfunktion das "Start-Teilmodell", Fig. 3 ist die Endsituation für das Beispiel der Fig. 2, Fig. 4 zeigt das fertige Modell für ein höheres Vertrauensintervall, Fig. 5 beinhaltet dieselbe Funktion, jedoch mit drastisch reduziertem Rauschen, Fig. 6a ist eine Darstellung einer originalen ellipsoiden Gewichtungsfunktion für einen 2-dimensionalen Eingangsraum und Fig. 6b zeigt eine weitere Gewichtungsfunktion, die aus der originalen Gewichtungsfunktion einen kleinen Bereich ausgeschnitten hat, Fig. 7 zeigt ein Beispiel für die Plazierung und Ausrichtung einer Gewichtungsfunktion über dem Eingangsraum, Fig. 8 ist ein Beispiel für eine nichtlineare Funktion über einem eindimensionalen Eingangsraum, Fig. 9 zeigt den dreidimensionalen Eingangsraum mit tatsächlichen Messdaten eines Verbrennungsmotors als Trainingsdaten für die Modellbildung, Fig. 10 ist die Darstellung eines Modells für eine bestimmte konstante Drehzahl und Fig. 11 das Modell für einen bestimmten Ventilhub, wobei Fig. 12 und Fig. 13 die Verteilung der Gewichtungsfunktionen für die Schnitte der Fig. 10 und Fig. 11 zeigen, Fig. 14 zeigt schematisch einen Versuchsaufbau zur Luftströmungs- und Temperaturregelung, Fig. 15 zeigt das Anregungssignal und den gemessenen Ausgang zusammen mit dem Modellausgang für die Temperaturänderung, und Fig. 16 zeigt den Modellausgang zu einem speziellen Validierungssignal verglichen mit den gemessenen Daten von der eigentlichen Anlage der Fig. 14.

Fig. 1 zeigt den Aufbau eines Local Model Trees. Jedes Teilmodell (bezeichnet als $LM_i$) verwendet den Eingangsvektor $u = [u_1 \cdot u_2... \cdot u_q]^T$ um seine zugehörige Gewichtungsfunktion $\Phi_i$ und seinen Teil-Ausgangswert $\hat{y}_i$ der nichtlinearen Zielfunktion $f(u)$ zu berechnen. Der gesamte Netzwerk-Ausgangswert ist die Summe aller gewichteten Teil-Ausgangswerte $\hat{y}_i$ :(Gleichung 4). Darin ist $\theta_i$ ein Vektor mit den Parametern der Teilmodelle und die Teilmodelle werden mit $u$ und $\theta_i$ erzeugt. Das Modell ist statisch, wenn der Eingangsvektor aus stationären Größen besteht und wird dynamisch wenn eine oder mehrere der Eingangsgrößen entweder die zeitliche Ableitung einer Systemgröße darstellt, oder die um eine odere mehrere Abtastschritte eines zeitdiskreten Systemes verzögerte Rückkoppelung der Ausgangsgröße ist.

Die Gesamtqualität des Netzausgangs wird durch zwei verschiedene Modellgütekriterien bestimmt. Bei $n$ Trainingsdatenpunkten und deren jeweiligen Ergebniswerten, den zugehörigen Netzausgängen und des Mittelwerts aller $y_i$, dient als erstes Modellgütekriterium, das Bestimmtheitsmaß $R^2$, welches ein Verhältnis von erklärter Streuung zur Gesamtstreuung der Messdaten im Vergleich zum Modell darstellt:

$$R^2 = 1 - \frac{\sum\limits_{i=1}^{n}(y_i - \hat{y}_i)^2}{\sum\limits_{i=1}^{n}(y_i - \bar{y})^2}.$$

$$(1)$$

Es beschreibt die relative Genauigkeit des Modells berechnet mit den gegebenen Trainingsdatenpunkten. Der Maximalwert von $R^2$ ist 1, was bedeutet, dass das Modell alle Trainigsdaten perfekt nachbildet. Für rauschfreie Trainingsdaten ist $R^2$ ein geeigneter Modellgütewert, bei vorhandenem Messrauschen kann eine Optimierung von $R^2$ aber leicht zu Overfitting führen. In diesem Fall dient die $R^2_{pred}$ -Statistik als besseres Kriterium:

$$R^2_{pred} = 1 - \frac{\sum\limits_{i=1}^{n}(y_i - \hat{y}_{i,\,i})^2}{\sum\limits_{i=1}^{n}(y_i - \bar{y})^2}.$$

$$(2)$$

Hier ist $\hat{y}_{i,-i}$ der Ausgangswert des i-ten Trainingsdatenpunkts eines Netzes, welches ohne Verwendung des i-ten Trainingsdatenpunktes gebildet wird. Dadurch beschreibt die $R^2_{pred}$ Statistik die Vorhersagegenauigkeit des Modells. Prinzipiell sind aber auch andere Parameter für die Bestimmung der statistisch bewerteten Vorhersagequalität möglich.

Der Baumbildungsalgorithmus besteht aus einer äußeren Schleife, welche die Position, Ausdehnung und Richtung eines Teilmodells bestimmt, und einer inneren Schleife, welche die Parameter eines Teilmodells optimiert:

*1. Beginn mit einem Startmodell:* Das Startmodell kann entweder global sein und alle Daten umfassen, oder ein einfaches Teilmodell sein (wie weiter unten beschrieben)

*2. Berechnen des nächsten Teilmodells:* Finden des Datenpunktes mit dem schlechtesten Ausgangswert oder Vorhersagefehler. Die Position dieses Datenpunktes bestimmt den Ort des nächsten Teilmodells. Festlegen der Richtung und Ausdehnung des neuen Modells, so dass statistische Kriterien mit den Messdaten in seinem Gültigkeitsbereich eingehalten werden. Dieses Vorgehen wird weiter unten genauer beschrieben.

3. Berechnung der Teilmodellparameter und der zugehörigen statistischen Parameter, die zur Berechnung der Vertrauensbereiche notwendig sind

*4. Test der Übereinstimmung:* Die Leistungskriterien $R^2$ und $R^2_{pred}$ für den Netzausgang werden berechnet. Gemäß eines Hauptmerkmales des vorliegenden erfindungsgemäßen Verfahrens stoppt der Algorithmus wenn der Grenzwert erreicht oder überschritten wird. Dies passiert auch dann, wenn keine weitere Verbesserung mehr erreicht werden kann. Sonst fährt der Algorithmus mit Schritt 2 fort. Speziell dann, wenn die Trainingsdaten mit starkem Messrauschen behaftet sind, ist es wichtig, dass der Algorithmus durch nützliche Regularisierungsfaktoren kontrolliert wird. Ansonsten würde der Algorithmus immer weitere kleinere Teilmodelle bilden, um die Gesamtqualität weiter zu verbessern. In unserem Fall wird dies durch die Berechnung der Vertrauensintervalle vermieden, wie ebenfalls weiter unten näher beschrieben wird.

Nachdem der Algorithmus mit der Bildung neuer Modelle fertig ist, wird jedes Teilmodell einer letzten Überprüfung auf seinen Beitrag am Gesamtausgangswert unterzogen. Wenn sich dabei herausstellt, dass ein Modell nur mehr einen sehr geringen Beitrag leistet, weil es von anderen Modellen zum Großteil ersetzt wurde, wird dieses gemäß einer bevorzugten Variante dieses Verfahrens vom Gesamtmodell wieder entfernt.

Jedes Teilmodell besteht grob aus zwei Teilen: Seiner Gewichtungsfunktion $\Phi(u)$ und seinen Modellparametern $\theta$. Der Ausgang $\hat{y}_i$ eines Teilmodells an einem Punkt $u$ des Eingangsbereichs ergibt sich aus

$$(3) \quad \hat{y}(u) = x^T(u) \cdot \theta.$$

Hier stellt $x^T(u)$ einen Zeilenvektor mit Regressionsfunktionen dar, die willkürlich gewählt werden können. Der Vorteil der Struktur in (4) liegt darin, dass $\hat{y}$ linear von den Parametern $\theta$ abhängt. Deshalb kann auch die Methode der kleinsten Fehlerquadrate zu ihrer Berechnung angewendet werden. Es bleibt die Bestimmung von passenden Regressionsfunktionen für $x^T(u)$, auf die weiter unten näher eingegangen wird.

Die Zielfunktion wird nur durch Trainingsdaten dargestellt, die mit Rauschen behaftet sind. Bei vorhandenem Rauschen ist es wünschenswert, dass jedes Teilmodell eine statistische Signifikanz besitzt. Dies wird auf folgende Art und Weise erreicht:

1. Die Auswahl des "Zentrumskandidaten" $z_i$ eines neuen Teilmodells basiert auf dem Vorhersagefehler $e = y - \hat{y}$. Hier ist $\hat{y}$ der Modellausgang des Netzes in seinem aktuellen Zustand, in dem bereits $i$-1 Modelle gebildet wurden:

$$(4) \quad \hat{y}(u) = \sum_{j=1}^{i-1} \Phi_j(u)\hat{y}_j(u.\theta_j)$$

Bei einer Anzahl von $n$ Datensätzen $u_j$ für das Modell Training wird der neue Zentrumskandidat dort plaziert, wo der Absolutbetrag des Fehlers maximal ist. Diese Auswahl stellt sicher, dass ein neues Teilmodell genau dort plaziert wird, wo es am Meisten gebraucht wird.

2. Als nächstes werden aus der unmittelbaren Umgebung solange weitere Trainingsdaten gewählt, bis ein erstes Regressionsmodell gebildet werden kann. Das Minimum an dafür benötigten Daten wird durch die Forderung bestimmt, dass die Regressionsmatrix maximalen Rang haben muss. Es werden die statistischen Kennwerte berechnet und eine Überprüfung durchgeführt, ob die Startdaten innerhalb eines beschriebenen Vertrauensintervalls mit einem zugehörigen Vertrauenswert $\alpha$ liegen. Wenn dies nicht mehr der Fall ist, stoppt die Iteration und der Algorithmus fährt mit der Berechnung der Parameter der Gewichtungsfunktion fort. Typischerweise wird für den Vertrauenswert $\alpha$ ein Wert zwischen 90% und 99% gewählt.

3. Anderenfalls werden weitere Trainingsdaten in der Umgebung von $z_k$ sukzessive hinzugefügt und das Startmodell in der selben Art und Weise neu berechnet und an die Daten angepasst. Dieser Vorgang wird so lange wiederholt, solange mindestens α% der Trainingsdaten innerhalb des Vertrauensintervalls liegen.

4. Wenn die Trainingsdaten für diesen Berechnungsschritt auf diese Weise bestimmt sind, wird ihre Verteilung im Eingangsraum verwendet um die Gestalt und Ausdehnung der Gewichtungsfunktion zu bestimmen.

Die Fig. 2 und 3 zeigen ein Beispiel einer nichtlinearen eindimensionalen Eingangsfunktion $f(u)$ mit α = 97%. Die Trainingsdaten werden durch Punkte dargestellt. Bild 2 zeigt das "Start-Teilmodell" : Als Zentrumskandidat für dieses Beispiel wurde $z_i$ gewählt, alle Datenpunkte im Intervall $u \, \varepsilon \, [0;1,7]$ wurden für die Regression ausgewählt. Die strichlierte Linie stellt die Grenzen des 97% Vertrauensintervalls dar. Fig. 3 zeigt die Endsituation: Zusätzliche Trainingsdaten wurden so lange hinzugefügt, bis schlussendlich mindestens 97% der ausgewählten Daten innerhalb der Grenzen des 97% Vertrauensintervalls liegen. Die resultierende Gewichtungsfunktion die zum Bild wegen der besseren Übersichtlichkeit hinzugefügt wurde, reicht von 0,1 bis 0,8 und hat ihr Maximum bei 0,4. Fig. 4 zeigt das fertige Modell für α=99,99%. Ein größerer Vertrauenswert bedeutet größere Vertrauensintervalle und ergibt in weiterer Folge eine größere Ausdehnung der Gewichtungsfunktion. Außerdem sieht man in diesem Beispiel, dass die Gestalt der Nichtlinearität einen viel größeren Einfluss auf die Modellgröße hat als in Fig. 3.

Fig. 5 beinhaltet dieselbe Funktion $f(x)$, der Einfluss des Messrauschens wurde jedoch drastisch reduziert. Obwohl der Vertrauenswert noch immer bei 99,99% liegt, ist die Gewichtungsfunktion nun signifikant kleiner. An diesen Beispielen wird deutlich, dass der Vertrauenswert ein hervorragender Regularisierungsparameter ist, der das Teilmodell automatisch an das Messrauschen der Trainingsdaten und an die Regressionsfaktoren anpasst.

Gemäß einer bevorzugten Variante des Verfahrens ist vorgesehen , dass die Struktur der Gewichtungsfunktion $\Phi_i$ wie folgt gewählt wird:

$$\Phi_i(\boldsymbol{u}) = \exp\left(-[(\boldsymbol{u} - \boldsymbol{z}_i)^T \boldsymbol{A}_i (\boldsymbol{u} - \boldsymbol{z}_i)]^{\kappa_i}\right) \cdot$$
$$\cdot \prod_{k=i+1}^{m} (1 - \Phi_k(\boldsymbol{u})) \qquad (5)$$

Der Vektor $z_i$ beinhaltet die Position des Teilmodellzentrums, sowie die Ausrichtung und Ausdehnung der Gewichtungsfunktion im Eingangsraum. Mit Hilfe eines Gestaltfaktors kann die Flachheit der Gewichtungsfunktion festlegt werden.

Die Struktur von Gleichung (5) zeigt, dass jede Gewichtungsfunktion anfangs eine radial symmetrische Funktion im n-dimensionalen Raum der Betriebspunkte bzw. Trainingsdaten ist, deren Isokurve in diesem n-dimensionalen Raum ein geschlossenes geometrisches Gebilde, vorzugsweise ein Hyper-Ellipsiod, ist. Für das in Fig. 6 dargestellte Beispiel eines zweidimensionalen Betriebspunkteraums ist die bevorzugte Form eine Exponentialfunktion mit ellipsoiden Konturen. Das Produkt in (5) schneidet alle nachfolgenden Gewichtungsfunktionen aus der Originalfunktion aus (siehe Fig. 6). Dieses Vorgehen hat den folgenden Vorteil: Alle nachfolgenden Teilmodelle werden in jene Bereiche des Eingangsraumes gesetzt, wo das vorhergehende Modell unzureichend ist. Gleichung (5) stellt die Dominanz des neuen Teilmodells in diesen Bereichen sicher. In Fig. 6 wird diese Situation für einen 2-dimensionalen Eingangsraum gezeigt, in dem ein kleiner Bereich aus einer originalen ellipsoiden Gewichtungsfunktion ausgeschnitten wird. Es müssen daher nur mehr die nichtlinearen Parameter der Gewichtungsfunktion aus den gewählten Trainingsdaten in oben beschriebener Weise bestimmt werden. Es sei $U_{sel}$ eine Matrix, welche alle diese Datenbereiche inklusive des Zentrumskandidaten enthält, d.h. jede Zeile von $U_{sel}$ beinhaltet den Koordinatenvektor $u_i$ eines gewählten Datenpunktes. Dann erhält man gemäß einer bevorzugten Variante des Verfahrens den eigentlichen Zentrumspunkt durch Schwerpunktsbildung der Daten in $U_{sel}$.

$$\boldsymbol{z}_i = \mathrm{mean}(\boldsymbol{U}_{sel}) \qquad (6)$$

wobei mean($\cdot$) den Mittelwert über jede Spalte darstellt.

Die Matrix $A_i$ wird berechnet durch

$$\boldsymbol{A}_i = \gamma \cdot [\mathrm{cov}(\boldsymbol{U}_{sel})]^{-1} \qquad (7)$$

wobei cov($U_{sel}$) die empirische Kovarianz-Matrix bezeichnet. Diese Vergehensweise wird etwa auch schon zum Entwurf von "ellipsoiden Basis Funktionen Netzen" verwendet.

Die prinzipielle Ausrichtung der neuen Gewichtungsfunktion ist deshalb durch $[cov(U_{sel})]^{-1}$ bestimmt, ihre Ausdehnung im Eingangsraum wird durch $\gamma$ kontrolliert. $\gamma$ wird dabei so gewählt, dass $\Phi i$ weiterhin 0,9 an jenem Datenpunkt in $U_{sel}$ bleibt, der am weitesten vom neuen Zentrum $z_i$ entfernt liegt. Dadurch wird sichergestellt, dass tatsächlich genug Datenpunkte zur Parameterabschätzung zur Verfügung stehen.

Neben $\alpha$ dienen aber auch $\gamma$ und $\kappa$ als weitere Regularisierungsfaktoren für diesen Modellbildungsalgorithmus. Je größer $\kappa$ gewählt wird, desto kleiner ist die Überlappung der einzelnen Teilmodelle untereinander. Deshalb kontrolliert $\kappa$ direkt die "Lokalität" der Modelle. Der Faktor $\gamma$ hängt direkt mit der Wahl von $\kappa$ zusammen und hat nur sicherzustellen, dass das "Kleinste Fehler Quadrate-Problem", wie bereits erwähnt, gut konditioniert ist. Folglich werden der Vertrauenswert $\alpha$ und $\kappa$ zur Parametrisierung des Trainings-Algorithmus verwendet.

Fig. 7 stellt diese Situation dar: Eine Menge von räumlich verteilten Messdaten (dargestellt durch Punkte) in einem 2-dimensionalen Eingangsraum wird mit $U_{sel}$ umschlossen. Der Vektor vom Zentrum zum weitest entfernten Punkt (eingekreist) ist mit $d_{max}$ bezeichnet. Gemäß einer bevorzugten Variante des Verfahrens ergibt sich der Faktor $\gamma$ somit zu

$$\gamma = \frac{\sqrt[\kappa]{-\ln(0.9)}}{d_{max}^T [cov(U_{sel})]^{-1} d_{max}}.$$

(8)

Die Ellipse in Fig. 7, als spezielles zweidimensionales Beispiel einer Isokurve der Gewichtungsfunktion, kennzeichnet die "0,9-Höhenlinie" der resultierenden Gewichtungsfunktion zu (5), ohne die Berücksichtigung weiterer, nachfolgenderer Gewichtungsfunktionen. Es ist offensichtlich, dass die Gewichtungsfunktion auf sehr effiziente Weise an die Daten angepasst ist, in dem ihre Hauptachsen nicht notwendigerweise parallel zu den Achsen des Eingangsraumes der Betriebspunkte des Systems sind, sondern prinzipiell beliebige Orientierung aufweisen können. Der Algorithmus ist nicht von einer günstigen Wahl der Teilungsparameter abhängig, sondern ist in der Lage, Modelle zu bilden, die sehr gut zu den verfügbaren Daten passen.

Wie bereits früher erwähnt, wird der Ausgang eines jeden Teilmodells durch das Regressionsmodell berechnet (3). Es müssen noch passende Regressionsfunktionen $x^T(u)$ bestimmt werden. Generell gibt es keine optimale Lösung, die zu allen nichtlinearen Problemen passt. Deshalb wird die Annahme getroffen, daß die nichtlineare Funktion f(u):

$\mathfrak{R}^q \rightarrow \mathfrak{R}$ die angenähert werden soll, zumindest zweimal kontinuierlich differenzierbar an jedem Punkt $u \varepsilon U$ ist, wobei U für den Definitionsraum steht, in dem f(u) angenähert werden soll. Wenn die oben genannte Annahme zutrifft, kann f(u) an jedem Punkt $u \varepsilon U$ in eine Taylorreihe entwickelt werden. Wenn die Regressionsfunktionen als Elemente einer abgeschnittenen Taylorreihe in $\mathfrak{R}^q$ gewählt werden, kann $f(u)$ beliebig gut in der Umgebung von $u_t$ angenähert werden, wenn das Teilmodell klein genug ist. Abhängig von der lokalen Komplexität von $f(u)$ würde dies in Gebieten einer starken Variabilität von $f(u)$ zu einer Vielzahl von Teilmodellen führen, und zu wenig größeren Teilmodellen in Gebieten, wo $f(u)$ relativ flach ist. Abgesehen vom Restfehler der Taylorreihe muss der Algorithmus auch Fehler durch Messrauschen behandeln, so dass die eigentliche Größe eines jeden Teilmodells durch beide Fehler beeinflusst wird._In der vorliegenden Anwendung werden die Regressionsfunktionen als quadratische Polynome des Netzeinganges gewählt:

$$\hat{y}_i(u) = c_i + u^T a_i + u^T B_i u.$$

(9)

Hier ist $c_i$ ein konstanter Offset, $a_i$ bezeichnet einen Vektor mit linearen Parametern und $B_i$ ist eine untere Dreiecksmatrix, welche die Parameter des quadratischen Terms beinhaltet. Schlussendlich erhält man $(q+1)(q+2)/2$ unabhängige Regressionsfunktionen, wobei $q$ die Dimension des Eingangsraumes darstellt.

$X$ sei eine Matrix mit den Regressionsvektoren aller $n$ Trainingsdatensätze:

$$X = \begin{pmatrix} x^T(u_1) \\ x^T(u_2) \\ \vdots \\ x^T(u_n) \end{pmatrix}$$

$$(10)$$

Weiters sei $Q_i$ eine Diagonalmatrix bestehend aus den $\Phi_i$, ausgewertet an den Trainingsdatenpunkten:

$$Q_i = \begin{pmatrix} \Phi_i(u_1) & 0 & \cdots & 0 \\ 0 & \Phi_i(u_2) & \cdots & 0 \\ \vdots & \vdots & \ddots & \vdots \\ 0 & 0 & \cdots & \Phi_i(u_n) \end{pmatrix}$$

$$(11)$$

Wenn y ein Vektor mit den Daten der Zielfunktion an den Datenpunkten ist, dann ist der $i$-te lokale Parametervektor gegeben durch

$$\theta_i = \left( X^T Q_i X \right)^{-1} X^T Q_i y.$$

$$(12)$$

Für die Berechnung der Statistik für die Teilmodelle wird die Annahme getroffen, daß die Trainingsdaten lokal durch das folgende Regressionsmodell beschrieben werden können:

$$y = X\beta + e$$

$$(13)$$

Hier enthält X die selben Regressionsfunktionen (oder einen Teil davon) wie x(u) in den Teilmodellen, e ist ein Vektor der mit weißem Rauschen beaufschlagt ist, mit der Standardabweichung $\sigma_n$ und $\beta$ ist der Vektor der zu identifizierenden Parameter.

Im Allgemeinen ist diese Annahme sehr einschränkend, trotzdem bedeutet es für den beschriebenen Konstruktions-Algorithmus keinen Verlust der Allgemeingültigkeit, weil die Gestalt und Ausdehnung eines jeden Teilmodells in Zusammenhang mit der Modellstatistik gebildet wird.

Durch Einsetzen von y aus (13) in (12) erhält man:

$$\theta_i = \left( X^T Q_{i\cdot j} X \right)^{-1} X^T Q_i (X\beta + e) =$$
$$= \beta + \left( X^T Q_i X \right)^{-1} X^T Q_i e$$

$$(14)$$

Für den gewünschten Wert $\theta$ erhält man:

$$E\{\theta_i\} = \beta + E\left\{ \left( X^T Q_i X \right)^{-1} X^T Q_j e \right\}$$

$$E\{\boldsymbol{\theta_i}\} = \boldsymbol{\beta} + \left(\boldsymbol{X^T Q_i X}\right)^{-1} \boldsymbol{X^T Q_j} \cdot E\{\boldsymbol{e}\} = \boldsymbol{\beta}$$

Man sieht, dass $\theta_i$ erwartungstreu ist. Mit diesem Ergebnis kann die Parameterabweichung auf folgende Weise formuliert werden:

$$(15) \quad \mathrm{cov}(\boldsymbol{\theta}) := E\{\boldsymbol{\delta\delta^T}\} \quad \text{with} \quad \boldsymbol{\delta} = \boldsymbol{\theta} - \boldsymbol{\beta}.$$

Durch Einsetzen von (14) in $E\{\delta\delta^T\}$ erhält man:

$$E\{\boldsymbol{\delta\delta^T}\} = E\left\{ \left[ \left(\boldsymbol{X^T Q_j X}\right)^{-1} \boldsymbol{X^T Q_j e} \right] \cdot \right.$$
$$\left. \cdot \left[ \boldsymbol{e^T Q_j X} \left(\boldsymbol{X^T Q_j X}\right)^{-1} \right] \right\}$$

Durch die folgende Substitution $\Theta_Q = (X^T Q_j X)^{-1}$ erhält man

$$(16) \quad E\{\boldsymbol{\delta\delta^T}\} = \boldsymbol{\Theta_Q X^T Q_i} \cdot E\{\boldsymbol{ee^T}\} \cdot \boldsymbol{Q_i X \Theta_Q}$$

Weil das Messrauschen an verschiedenen Trainingsdatenpunkten nicht miteinander in Beziehung steht, gilt $E\{\delta\delta^T\} = \sigma_n^2 I$. Deshalb wird die Kovarianz des Parametervektors schließlich zu:

$$(17) \quad \mathrm{cov}(\boldsymbol{\theta}) = \sigma_n^2 \boldsymbol{\Theta_Q X^T Q_i^2 X \Theta_Q}.$$

Es muss erwähnt werden, dass die Rauschkovarianz $\sigma_n^2$ in den meisten Fällen unbekannt ist und deshalb durch die empirische Kovarianz berechnet aus den verfügbaren Daten ersetzt werden muss. Es wird angenommen, dass $\sigma_n^2$ in allen Bereichen des Eingangsraumes konstant ist. In einigen praktischen Situationen kommt es aber trotzdem vor, dass die Rauschkovarianz auch im Eingangsraum variiert. Wenn die räumliche Änderungsrate im Vergleich zur Größe des Modells klein ist, dann ist (17) weiterhin gültig. Auch die globale Modellstatistik kann in diesem Fall mit den Änderungen von $\sigma_n^2$ gerechnet werden.

Die Streuung des Teilmodellausgangs $\hat{y}_i(u_i)$ wird dann berechnet durch

$$E\left\{ (y_i - \hat{y}_i)(y_i - \hat{y}_i)^T \right\} =$$
$$= E\left\{ [x(u_i)\delta - e][x(u_i)\delta - e]^T \right\} =$$
$$= E\left\{ x(u_i)\delta\delta^T x(u_i)^T - x(u_i)\delta e - e\delta^T x(u_i)^T + e^2 \right\}$$

Durch Einsetzen von $E\{\delta\delta^T\}$ aus (17) und Berücksichtigung, dass e für jene Datenpunkte unabhängig von $\delta$ ist, die nicht für die Parameterabschätzung verwendet wurden, erhält man:

$$(18) \quad \mathrm{cov}(\hat{y}) = x(u_i)\boldsymbol{\Theta_Q X^T Q_i^2 X^T \Theta_Q} x(u_i)^T \sigma_n^2 \sigma_n^2$$

Dies führt zu

$$(19) \quad \mathrm{cov}(\hat{y}_i(\boldsymbol{u})) = \sigma_n^2[1 + \boldsymbol{x}(\boldsymbol{u}_i)\Theta_Q \boldsymbol{X}^T \boldsymbol{Q}_i^2 \boldsymbol{X} \Theta_Q \boldsymbol{x}(\boldsymbol{u}_i)].$$

Für diejenigen Datenpunkte ui die zum Trainieren verwendet wurden, ist $e$ unabhängig von $\delta$ und (19) wird durch eine ähnliche Funktion ersetzt, deren Erklärung hier zu weit führen würde. Das Vorhersageintervall an einem Punkt $u$ im Eingangsraum mit einem Signifikanzlevel von $\alpha$ ist gegeben durch

$$|\hat{y}(\boldsymbol{u}) - y(\boldsymbol{u})|_\alpha =$$

$$(20) \quad = \sigma_n \sqrt{1 + \boldsymbol{x}(u)\Theta_Q \boldsymbol{X}^T \boldsymbol{Q^2}_j \boldsymbol{X} \Theta_Q \boldsymbol{x}(u))} \times t_{1-\frac{\alpha}{2}}$$

Wie gezeigt, müssen die t-Statistiken für ein Signifikanzlevel von $\alpha$-% mit den Freiheitsgraden berechnet werden, die sowohl von der Anzahl der verwendeten Trainingsdatenpunkte abhängen, als auch von der Anzahl der Regressoren.

Abgesehen von der Bildung der Teilmodelle muss auch das Zusammenwirken aller Teilmodelle bei der Gesamtmodellbildung berücksichtigt werden. Dies bezieht sich sowohl auf das Zusammenführen der Teilmodellausgänge, als auch auf die Gesamtmodellstatistiken, die globalen Vorhersageintervalle und auf effiziente Berechnungswege für die $R^2$ und $R^2_{pred}$ Statistiken aus (1) und (2).

Wie in Fig. 1 gezeigt, besteht der Gesamtmodellausgang aus einer gewichteten Summe aller Teilmodellausgänge. Die Gewichte hängen von der Position von $\boldsymbol{u}$ im Eingangsraum ab und werden durch die Gewichtungsfunktion $\Phi$ bestimmt. Wie bereits vorher erwähnt, bestimmen die Designparamter der Gewichtungsfunktion, speziell $\kappa$, den Überlappungsgrad der einzelnen Teilmodelle, und bestimmen daher auch den Regularisierungsgrad der Modellfunktion. Es ist eindeutig, dass starke Überlappung generell zu einer stärker regularisierten Funktionsanpassung führt.

Mit dem Netzausgang kann das Bestimmtheitsmaß daher wie gewohnt berechnet werden. Auch $R^2_{pred}$ kann über die Definition (2) berechnet werden.

$$R^2_{pred} = 1 - \frac{\sum_{i=1}^{n} \left( \frac{\hat{y}_i - y_i}{1 - q_i h_i} \right)^2}{\sum_{i=1}^{n} (y_i - \bar{y})^2}.$$

Die Berechnung der Vertrauensintervalle auf globaler Ebene besteht aus zwei Schritten:

1. Berechnung der Kovarianz
2. Bestimmung des effektiven Freiheitsgrades auf globaler Ebene für die $t_\alpha$ Statistiken

Schritt eins ist nicht sehr kompliziert, da der globale Modellausgang eine Linearkombination des Teilmodells wie in Fig. 1 dargestellt ist:

$$(21) \quad \mathrm{cov}(\hat{y}(\boldsymbol{u})) = \sum_{i=1}^{m} \Phi_i^2(\boldsymbol{u})\mathrm{cov}(\hat{y}_i(\boldsymbol{u}))$$

In der obigen Formel stammt $\mathrm{cov}(\hat{y}_i(u))$ aus (19). Es ist bemerkenswert, dass $\sigma_n^2$ nicht direkt in (21) enthalten ist. Die Kovarianz $\mathrm{cov}(\hat{y}_i(u))$ eines jeden Teilmodells hängt von der Modellstruktur und vom lokalen Messrauschen ab. D.h. dass (21) auch angewendet werden kann, wenn das Messrauschen von Teilmodell zu Teilmodell unterschiedlich ist, sofern $\mathrm{cov}(\hat{y}_i(u))$ richtig berechnet wurde. Weiters ist anzumerken, dass die einzelnen lokalen Teilmodelle prinzipiell nicht statistisch unabhängig sind. Durch den geringen Überlappungsgrad der Teilmodelle in der vorliegenden Anwendung spielt dieser Sachverhalt aber keine nennenswerte Rolle.

Für das Gesamtmodell ist der Ausgang an den Trainingsdatenpunkten gegeben durch

$$\hat{y} = S y \ \text{ with } \ S = \sum_{i=1}^{m} S_i$$

und

$$S_i = Q_i X (X^T Q_i X)^{-1} X^T Q_i.$$

Die Matrix S transformiert daher die eigentlichen Trainingsdatenpunkte y in ihre modellierten Gegenstücke $\hat{y}$ und wird daher "smoothing matrix" genannt. Die Anzahl der effektiven Parameter $n_{eff,I}$ der Teilmodelle ergibt sich aus

$$(22) \quad n_{eff,i} = \text{trace}(S_i^T S_i)$$

und wie bereits beschrieben ergibt sich die gesamte Anzahl der effektiven Parameter zu

$$n_{eff} = \sum_{i=0}^{m} n_{eff,i}.$$
$$(23)$$

Die verbleibenden Freiheitsgrade ergeben sich dann zu $DOF = n - n_{eff}$ und stellen die Basis für die Berechnung der t-Statistik dar. Es ist bemerkenswert, dass $n_{eff}$ aus (23) nicht unbedingt ein integer-Wert sein muss. Während des Baumbildungsprozesses passiert es öfters, dass die Gewichtungsfunktion eines Teilmodells nach und nach durch weitere Gewichtungsfunktionen weggeschnitten wird, sodass es schlussendlich nichts mehr zur Modellqualität beiträgt. In der aktuellen Anwendung werden diese Teilmodelle letztlich entfernt, wenn ihr $n_{eff,i}$ unter 1 fällt.

Das erste Beispiel für die obige Verfahrensweise ist von sehr anschaulicher Natur und soll die diesem Verfahren innewohnenden Möglichkeiten aufzeigen. Man betrachte die nichtlineare Funktion $f: \mathfrak{R} \to \mathfrak{R}$ in einem eindimensionalen Eingangsraum, in welchem die Isokurve der Gewichtungsfunktion ein Intervall darstellt:

$$f(u) = 0.1u + \sin(1.2u^2) + 0.05u^2 + n(u)$$

Hier ist $n(u)$ ein nicht korrelierendes Rauschen mit einer Kovarianz von 0.05:

$$E\{n(u)n(u+\tau)\} = \delta(\tau)0.05^2$$

Das Netz wurde mit 230 Datenpunkten aus dem Intervall $u \in [0;4]$ trainiert. Letztendlich wurden acht Teilmodelle gebildet, die in Fig. 8 dargestellt sind. Aus den Gewichtungsfunktionen kann man erkennen, dass die Teilmodelle in der näheren Umgebung der Wendepunkte von $f(u)$ aneinander übergehen. Aufgrund des starken Rauschens entscheidet der Algorithmus, jeden konvexen und konkaven Abschnitt von f(u) mit einem Teilmodell zu modellieren, außer dem Abschnitt $u \in [2.36;2.81]$, wo mehrere kleinere Teilmodelle gebildet wurden. Das Netz wurde auf $R^2_{pred}$ optimiert, der Endwert war $R^2_{pred} = 0.99$ mit $R^2 = 0.9917$. Man sieht, dass die berechneten Vorhersageintervalle sehr präzise sind. Tatsächlich liegen 93% der 200 Verifikationsdatenpunkte aus Fig. 8 innerhalb des 95% Vorhersageintervalls.

In einem zweiten Beispiel werden reale Messdaten eines Verbrennungsmotors modelliert. Im Speziellen soll die Lufteffizienz $A_e$ als Funktion von Drehzahl $n$, Ventilhub $L_v$ und Einlassschließzeit $T_c$ abgebildet werden:

$$A_e = f\left(n, L_v, T_C\right)$$

Fig. 9 zeigt den 3-dimensionalen Eingangsraum $U$ mit den verfügbaren Trainingsdaten. Das resultierende Netz modelliert die Funktion $f: \mathcal{R}^3 \rightarrow \mathcal{R}$ mit einer Genauigkeit von $R^2 = 0.9941$ und $R^2_{pred} = 0.9931$ bei 7 Teilmodellen. Zum Vergleich benötigt der LOLIMOT Algorithmus bei Verwendung der gleichen quadratischen Teilmodellstruktur 30 Teilmodelle, um die gleiche Genauigkeit zu erreichen, soferne man das Abbruchkriterium geeignet definiert hat. Fig. 9 zeigt außerdem zwei Schnittflächen: Eine für $n = 2800$ und eine zweite für $L_v = 2$. Die Fig. 10 und 11 zeigen den Netzausgang für diese beiden Schnitte zusammen mit den zugehörigen Trainingsdatenpunkten. Die Farbenlegende bezeichnet das 95%-ige Vertrauensintervall (in Prozent von 1). Es ist offensichtlich, dass das Vertrauensintervall eine sehr gleichmäßige Gestalt besitzt, welches nur kleine Abweichungen an den äußeren Grenzen des zu vermessenden Bereiches aufweist. Die Fig. 12 und 13 zeigen zusätzlich die Bereiche der Gewichtungsfunktionen in diesen Schnittflächen. Man beachte, dass nicht alle Gewichtungsfunktionen bei n = 2800 und $L_v = 2$ aktiv sind.

Die Laborexperimentanordnung "Luftströmungs- und Temperaturregelung" in Fig. 14 enthält die technischen Realisierungen von zwei verschiedenen Regelungen (Luftströmungsregelung erster Ordnung, Temperaturregelung höherer Ordnung). Ein hinter einer Drosselklappe D angeordneter axialer Ventilator V erzeugt einen Luftstrom in einem Polypropylenrohr R. Ein Heizelement H erzeugt Wärme in diesem Strom. Zwei Messungen stehen zur Verfügung: Das Luftvolumen der Strömung wird durch einen Druckdifferenzsensor P gemessen, der den Druck vor einer Düse D1 mit dem konstanten Umgebungsdruck vergleicht. Der andere Sensor T misst die Lufttemperatur $T$. Die beiden Sensoren P, T (Industriestandard) sind an bestimmten Positionen des Rohres R angebracht.

Aufgrund der Natur des Prozesses tritt die stärkste Nichtlinearität zwischen der Ventilatorspannung $u_F$ und der gemessenen Temperatur $T$ auf.

Die dynamische Identifikation dieser Anlage wird mit Hilfe der Funktion $\dot{T} = g(T, u_F, P)$ durchgeführt.

Da eine Messung von $T'$ nicht direkt verfügbar ist, wurde der zentrale Differentialquotient von $T(t)$ als Zielfunktion für das Netztraining verwendet. Die Anregung der Anlage wurde so gewählt, dass der gesamte Eingangsbereich durchlaufen wird. Fig. 15 zeigt das Anregungssignal $u_F(t)$ und den gemessenen Ausgang T(t) zusammen mit dem Modellausgang $\hat{T}(t)$. Im vorliegenden Beispiel wurde das Validierungssignal $T(t)$ durch numerisches Lösen folgender Differentialgleichung generiert:

$$\dot{\hat{T}}(t) = \hat{g}(\hat{T}, u_{F,m}, P_m)$$

Darin sind $\hat{g}$ die vom Netz identifizierte nichtlineare Funktion, und $u_{F,m}$, $P_m$ die gemessene Ventilatorspannung bzw. der Druck.

Fig. 16 zeigt den Modellausgang $\hat{T}$ zu einem Validierungssignal $u_F(t) = 60 + 35 \cdot \sin(10^{-6} \cdot t^2)$ verglichen mit den gemessenen Daten von der eigentlichen Anlage. Die Nichtlinearität des Prozesses ist sehr klar im Verlauf von T(t) ersichtlich. Man sieht außerdem, dass der maximale Fehler des identifizierten Modells nur 1°C beträgt.

Die Gewichtungsfunktionen der generierten Modelle sind genau an die verfügbaren Daten angepasst. Dies wird durch die beliebige Ausrichtung und Ausdehnung der Gewichtungsfunktion eines jeden Teilmodells im Eingangsraum erreicht. Jede Gewichtungsfunktion wird in einen Bereich des Eingangsraumes positioniert, wo der Modellfehler noch groß genug ist, um als optimale Basis für eine weitere Modellverbesserung zu dienen. Die Ausrichtung und Ausdehnung eines jeden Teilmodells sind an die vorhandenen Messdaten und an das Messrauschen so angepasst, dass die Bestimmung der lokalen Regressionsparameter ein gut geartetes Problem darstellt. Die Regularisierung des Modells kann durch den Formfaktor $\kappa$ und den Vertrauenswert $\alpha$ kontrolliert werden. Der Formfaktor bestimmt die Überlappung zwischen den einzelnen Teilmodellen und der Vertrauenswert bestimmt die Größe der Teilmodelle.

Das erfindungsgemäße Verfahren versorgt den Benutzer mit genauen Modellstatistiken, die helfen, die Verlässlichkeit des betrachteten Modells abzuschätzen. Die gezeigten Anwendungen - synthetisches Beispiel mit verrauschten Daten und reale Messdaten einer Verbrennungskraftmaschine mit 3-dimensionalem Eingangsraum sowie dynamische Luftströmungs- und Temperaturrelgelung - verdeutlichen, dass mit dem erfindungsgemäßen Verfahren exzellente Ergebnisse bei einer relativ geringen Anzahl von Teilmodellen zu erzielen sind.

**Patentansprüche**

1. Verfahren zur Erstellung eines nichtlinearen stationären oder dynamischen Modells einer Arbeitsmaschine, insbesonders eines Verbrennungsmotors oder eines Teilsystems davon, im gesamten Raum aller Betriebspunkte der Arbeitsmaschine, vorzugsweise unter Verwendung von neuronalen Netzen, mit einer von einem Satz von Eingangsgrößen, beispielsweise Systemparametern, nach der Zeit differenzierten Systemparametern, zeitverzögert rückgekoppelten Ausgangsgrößen und/oder Vorgabewerten am jeweiligen Betriebspunkt abhängigen Steuergröße, die für eine Gruppe von Betriebspunkten aus dem gesamten Raum von Betriebspunkten der Arbeitsmaschine messtechnisch ermittelt wird, wobei an diesen Betriebspunkten unter Verwendung einer vereinfachten Teil-Modellfunktion eine Ausgangsgröße pro Modellfunktion bestimmt wird, und wobei an jedem beliebigen Betriebspunkt die Ausgangsgrößen jeder Teil-Modellfunktion mit einer zugehörigen Gewichtungsfunktion gewichtet zu einer Gesamt-Ausgangsgröße für den jeweiligen Betriebspunkt zusammengezählt werden, wobei für alle Betriebspunkte mit messtechnisch ermittelter Steuergröße jeweils die Differenz zwischen der Gesamt-Ausgangsgröße und dem messtechnisch ermittelten Wert der Steuergröße bestimmt wird und in Bereichen von Betriebspunkten mit einem Absolutbetrag dieser Differenz oberhalb eines vorgegebenen Wertes eine weitere Modellfunktion mit einer weiteren zugehörigen Gewichtungsfunktion verwendet wird, bei welcher der Absolutbetrag der Differenz unterhalb des vorgegebenen Wertes bleibt, **dadurch gekennzeichnet, daß** der Schritt der Ermittlung der Differenz zwischen der Gesamt-Ausgangsgröße der zugehörigen Teil-Modellfunktionen und einem messtechnisch ermittelten Wert der Steuergröße an diesem messtechnisch ausgewerteten Betriebspunkt sowie der Schritt der Anwendung einer weiteren Modellfunktion und weiteren Gewichtungsfunktion so oft durchlaufen wird, bis die statistisch bewertete Vorhersagequalität des Gesamt-Modells einen gewünschten Wert erreicht hat.

2. Verfahren nach Anspruch 1, **dadurch gekennzeichnet, daß** der jeweils letzte Schritt rückgängig gemacht und der Durchlauf beendet wird, wenn sich die statistisch bewertete Vorhersagequalität wieder verschlechtert.

3. Verfahren nach Anspruch 1 oder 2, **dadurch gekennzeichnet, daß** jede Gewichtungsfunktion eine radial symmetrische Funktion im n-dimensionalen Raum der Betriebspunkte ist, wobei die Isokurven der Gewichtungsfunktion im Raum der Betriebspunkte ein geschlossenes geometrisches Gebilde (od. Figur) darstellt, und jede Isokurve mit Gewichtungswerten einer definierten Grenze, vorzugsweise von 90% des maximalen Wertes der Gewichtungsfunktion, eine Gruppe von realen Betriebspunkten geometrisch umschließt.

4. Verfahren nach Anspruch 3, **dadurch gekennzeichnet, daß** die Isokurve der Gewichtungsfunktion im n-dimensionalen Raum ein Hyper-Ellipsoid ist, dessen Hauptachsen im Raum der Betriebspunkte eine gegenüber dem Koordinatensystem prinzipiell beliebige Orientierung aufweisen.

5. Verfahren nach Anspruch 3 oder 4, **dadurch gekennzeichnet, daß** die Gewichtungsfunktion eine Exponentialfunktion zumindest einer Eingangsgröße am jeweiligen Betriebspunkt ist.

6. Verfahren nach einem der Ansprüche 3 bis 5, **dadurch gekennzeichnet, daß** eine erste Gewichtungsfunktion vorgesehen ist, dessen Isokurve eines definierten Gewichtungswertes alle realen Betriebspunkte geometrisch einschließt.

7. Verfahren nach Anspruch 6, **dadurch gekennzeichnet, daß** ausgehend vom Betriebspunkt mit dem größten Absolutbetrag der Differenz -zwischen Gesamt Ausgangsgröße des Modells und tatsächlichem Wert der Steuergröße weitere Punkte für das nächste Teilmodell bestimmt werden, an dessen Zentrum (Schwerpunkt) die weitere Gewichtungsfunktion platziert wird.

8. Verfahren nach einem der Ansprüche 3 bis 7, **dadurch gekennzeichnet, daß** die Anzahl der realen Betriebspunkte innerhalb der Isokurve eines definierten Gewichtungswertes der Gewichtungsfunktion größer ist als die Anzahl der Regressoren, vorzugsweise um zumindest einen Faktor 1,05.

9. Verfahren nach Anspruch 8, **dadurch gekennzeichnet, daß** bei Absinken der Anzahl der Regressoren innerhalb der geschlossenen Isokurve eines definierten Gewichtungswertes der Gewichtungsfunktion unter die mit einem Faktor multiplizierte Anzahl der Eingangsgrößen, vorzugsweise unterhalb die mit einem Faktor 1,05 multiplizierte Anzahl, dieses Modell und zugehörige Gewichtungsfunktion vom Gesamtmodell entfernt wird.

10. Verfahren nach einem der Ansprüche 1 bis 9, **dadurch gekennzeichnet, daß** der Fehler der Modellfunktion innerhalb der definierten Isokurven jeder Gewichtungsfunktion kleiner als 10% ist.

**Claims**

1. Method for developing a nonlinear, stationary or dynamic model of a working machine, in particular an internal combustion engine or a subsystem thereof, in the entire space of all the operating points of the working machine, preferably by using neuronal networks, having a controlled variable which is dependent on a set of input variables, for example system parameters, system parameters differentiated with respect to time, output variables fed back with a time delay, and/or stipulated values at the respective operating point, and which is determined metrologically from a group of operating points from the entire space of operating points of the working machine, one output variable per model function being determined at these operating points by using a simplified partial model function, and at each arbitrary operating point the output variables of each partial model function being summed, in a fashion weighted with an associated weighting function, to form a total output variable for the respective operating point, the difference between the total output variable and the value, determined metrologically, of the control variable respectively being determined for all operating points with the aid of the metrologically determined control variable, and use being made, in ranges of operating points with an absolute value of this difference above a prescribed value, of a further model function with a further associated weighting function in the case of which the absolute value of the difference remains below the prescribed value, **characterized in that** the step of determining the difference between the total output variable of the associated partial model functions and a metrologically determined value of the control variable at this metrologically evaluated operating point, and the step of applying a further model function and further weighting function is carried out until the statistically assessed predictive quality of the overall model has reached a desired value.

2. Method according to Claim 1, **characterized in that** the respectively last step is cancelled and the cycle is ended when the statistically assessed predictive quality becomes worse again.

3. Method according to Claim 1 or 2, **characterized in that** each weighting function is a radially symmetrical function in the n-dimensional space of the operating points, the isocurves of the weighting function in the space of the operating points constituting a closed geometrical configuration (or figure), and each isocurve with weighting values of a defined limit, preferably of 90% of the maximum value of the weighting function, geometrically encloses a group of real operating points.

4. Method according to Claim 3, **characterized in that** the isocurve of the weighting function in the n-dimensional space is a hyper-ellipsoid whose major axes in the space of the operating points have an orientation which is arbitrary in principle with reference to the coordinate system.

5. Method according to Claim 3 or 4, **characterized in that** the weighting function is an exponential function of at least one input variable at the respective operating point.

6. Method according to one of Claims 3 to 5, **characterized in that** a first weighting function is provided whose isocurve of a defined weighting value geometrically encloses all real operating points.

7. Method according to Claim 6, **characterized in that**, starting from the operating point with the largest absolute value of the difference between the total output variable of the model and the actual value of the control variable, further points are determined for the next partial model at whose centre (central) the further weighting function is placed.

8. Method according to one of Claims 3 to 7, **characterized in that** the number of real operating points inside the isocurve of a defined weighting value of the weighting function is larger than the number of the regressors, preferably by at least a factor of 1.05.

9. Method according to Claims 8, **characterized in that** when the number of regressors inside the closed isocurve of a defined weighting value of a weighting function drops below the number, multiplied by a factor, of the input variables, preferably below the number multiplied by a factor of 1.05, this model and associated weighting function are removed from the overall model.

10. Method according to one of Claims 1 to 9, **characterized in that** the error of the model function inside the defined isocurve of each weighting function is smaller than 10%.

## Revendications

1. Procédé d'établissement d'un modèle non linéaire, stationnaire ou dynamique, d'une machine de travail, en particulier d'un moteur à combustion interne ou d'un système qui en fait partie, dans l'ensemble de l'espace de tous les points de fonctionnement de la machine de travail, de préférence par recours à des réseaux neuronaux,
avec une grandeur de commande qui dépend d'un ensemble de grandeurs d'entrée, par exemple des paramètres du système, la différentielle par rapport au temps de paramètres du système, des grandeurs de sortie qui rétroagissent avec retard temporel et/ou des valeurs de consigne en chaque point de fonctionnement, laquelle grandeur de commande est déterminée par mesure sur un groupe de points de fonctionnement de l'ensemble de l'espace des points de fonctionnement de la machine de travail,
une grandeur de sortie étant déterminée en ces points de fonctionnement pour chaque fonction du modèle en recourant à une fonction partielle simplifiée du modèle,
les grandeurs de sortie de chaque fonction partielle du modèle étant pondérées par une fonction de pondération associée à chaque point de fonctionnement quelconque et étant rassemblées en une grandeur globale de sortie pour chaque point de fonctionnement,
pour tous les points de fonctionnement qui présentent une grandeur de commande déterminée par mesure, la différence entre la grandeur globale de sortie et la valeur déterminée par mesure de la grandeur de commande est déterminée, et dans le calcul des points de fonctionnement, lorsque la valeur absolue de cette différence est supérieure à une valeur prédéterminée, on utilise une autre fonction du modèle à laquelle est associée une autre fonction de pondération pour laquelle la valeur absolue de la différence reste en dessous de la valeur prédéterminée, **caractérisé en ce que**
l'étape de détermination de la différence entre la grandeur globale de sortie des fonctions partielles du modèle associées et une valeur déterminée par mesure de la grandeur de commande en ce point de fonctionnement évalué par mesure ainsi que l'étape d'utilisation d'une autre fonction du modèle et d'une autre fonction de pondération sont répétées jusqu'à ce que la qualité prédictive évaluée statistiquement du modèle global a atteint une valeur souhaitée.

2. Procédé selon la revendication 1, **caractérisé en ce que** chaque dernière étape est annulée et la boucle se termine lorsque la qualité prédictive évaluée statistiquement se détériore à nouveau.

3. Procédé selon les revendications 1 ou 2, **caractérisé en ce que** chaque fonction de pondération est une fonction à symétrie radiale dans l'espace à n dimensions des points de fonctionnement, les isocourbes de la fonction de pondération dans l'espace des points de fonctionnement représentant un objet géométrique (ou une figure) fermé, chaque isocourbe dont les points de pondération ont une limite définie, de préférence de 90 % de la valeur maximale de la fonction de pondération, englobant géométriquement un groupe de points de fonctionnement réels.

4. Procédé selon la revendication 3, **caractérisé en ce que** l'isocourbe de la fonction de pondération dans l'espace à n dimensions est un hyper-ellipsoïde dont l'orientation des axes principaux par rapport au système de coordonnées dans l'espace des points de fonctionnement est en principe quelconque.

5. Procédé selon les revendications 3 ou 4, **caractérisé en ce que** la fonction de pondération est une fonction exponentielle d'au moins une grandeur d'entrée en chaque point de fonctionnement.

6. Procédé selon l'une des revendications 3 à 5, **caractérisé en ce qu'**il présente une première fonction de pondération dont l'isocourbe d'une valeur de pondération définie englobe géométriquement tous les points de fonctionnement réels.

7. Procédé selon la revendication 6, **caractérisé en ce que** partant du point de fonctionnement qui présente la plus grande valeur absolue de la différence entre la valeur de sortie globale du modèle et la valeur effective de la grandeur de commande, d'autres points sont déterminés pour le modèle partiel suivant au centre (centre de gravité) duquel est placée l'autre fonction de pondération.

8. Procédé selon l'une des revendications 3 à 7, **caractérisé en ce que** le nombre des points de fonctionnement réels à l'intérieur de l'isocourbe d'une valeur de pondération définie de la fonction de pondération est supérieur au nombre des régresseurs, et ce de préférence d'au moins un facteur 1,05.

9. Procédé selon la revendication 8, **caractérisé en ce que** lorsque le nombre des régresseurs diminue à l'intérieur de l'isocourbe fermée d'une valeur de pondération définie de la fonction de pondération en dessous du nombre des grandeurs d'entrée multiplié par un facteur et de préférence en dessous du nombre multiplié par un facteur de 1,05, ce modèle et la fonction de pondération qui lui est associée sont retirés du modèle global.

**10.** Procédé selon l'une des revendications 1 à 9, **caractérisé en ce que** l'erreur de la fonction de modélisation à l'intérieur des isocourbes définies de chaque fonction de pondération est inférieure à 10 %.

**Fig. 1**

**Fig. 2**

**Fig. 3**

**Fig. 4**

**Fig. 5**

**Fig. 6a**

**Fig. 6b**

**Fig. 7**

**Fig. 8**

**Fig. 9**

**Fig. 10**

**Fig. 11**

**Fig. 12**

**Fig. 13**

Fig. 14.

Fig. 15.

Fig. 16.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **R. Isermann et al.** Mechatronics. Pergamon, 10. Dezember 2003, vol. 13, 1067-1089